# EUROPEAN PATENT SPECIFICATION

(11) **EP 2 643 578 B1**
(45) Date of publication and mention of the grant of the patent: **23.03.2016**
(21) Application number: 11770844.6
(22) Date of filing: 23.09.2011
(51) Int. Cl.: F02F 1/16, F01M 11/02, F02F 1/00, F01P 3/00

(54) **ENGINE BLOCK ARRANGEMENT AND METHOD FOR PREVENTING FRETTING**
MOTORBLOCKANORDNUNG UND VERFAHREN ZUR VERHINDERUNG VON REIBKORROSION
ENSEMBLE BLOC-MOTEUR ET PROCÉDÉ PERMETTANT D'EMPÊCHER L'USURE DE CONTACT

(30) Priority: 22.11.2010 FI 20106227
(43) Date of publication of application: 02.10.2013
(73) Proprietor: Wärtsilä Finland Oy, 65380 Vaasa (FI)
(72) Inventor: GRANLUND, Ulf, FI-65320 Vasa (FI); RÖNNBERG, Martin, FI-65800 Replot (FI)
(74) Representative: Berggren Oy Ab
(86) International application number: PCT/FI2011/050819
(87) International publication number: WO 2012/069692

(56) References cited:
- DE-A1- 1 576 407
- DE-A1- 4 436 969
- US-A- 4 108 135

## Description

### Technical field of the invention

The present invention relates to an engine block arrangement in a reciprocating piston internal combustion engine, the arrangement comprising an engine block and a cylinder liner being arranged inside the engine block, as defined in the preamble of claim 1. The invention also concerns a method for preventing fretting of the contact surfaces between a cylinder liner and an engine block in accordance with the preamble of claim 8.

### Background of the invention

Fretting refers to wear damage that is caused when two surfaces move in relation to each other with very small amplitudes. A typical cause of fretting is vibration under load. Fretting is a common problem in internal combustion engines, where the contact surfaces between the cylinder liners and the engine block move in relation to each other. These minor movements are caused mainly by the movement of the pistons and pressure variations in the cylinders.

In Japanese patent application JP 59200043 A the fretting problem of cylinder liners has been approached by arranging solid lubricating layers on those surfaces of the engine block that are in contact with the cylinder liner. A similar solution is shown in the patent document US 3641882 A, where part of the outer surface of a cylinder liner that is in contact with a cylinder bore is coated with a layer of plastic material. This kind of structure is more complicated to manufacture than liners made of one material. In addition, a solid lubricating layer forms an additional wearing part.

An engine with a lubricating oil chamber between the engine block and the cylinder liner and means for introducing lubricating oil from the cylinder head is known from DE 44 36 969.

### Summary of the invention

The object of the present invention is to provide an improved engine block arrangement and a method for preventing fretting of the contact surfaces between an engine block and a cylinder liner. The arrangement and the method according to the present invention are characterized by the features given in the characterizing parts of claims 1 and 6 respectively.

According to the present invention, the engine block arrangement in a reciprocating piston internal combustion engine comprises an engine block and a cylinder liner being arranged inside the engine block. The arrangement further comprises a lubricating oil chamber being arranged between the cylinder liner and the engine block, and means for introducing lubricating oil into the lubricating oil chamber.

The lubricating oil introduced into the chamber surrounds the cylinder liner and due to its mass and viscosity reduces vibrations caused by piston movement and pressure variations in the cylinder. Since fretting of the contact surfaces is mainly caused by vibration, the damping effect of the lubricating oil reduces fretting. Also the lubrication of the contact surfaces between the engine block and cylinder liner contributes to the fretting reducing effect.

According to an embodiment of the invention, the lubricating oil chamber is arranged around the whole circumference of the cylinder liner.

According to an embodiment of the invention, the height of the lubricating oil chamber is at least 20 percent of the length of the cylinder liner.

According to an embodiment of the invention, apart from the contact surfaces between the engine block and the cylinder liner, the lubricating oil chamber extends over the whole length of the cylinder liner inside the engine block.

According to the invention, the arrangement is provided with means for keeping the oil level in the lubricating oil chamber at a predetermined level. According the invention, the engine block is provided with a drain hole for keeping the oil level at the predetermined level.

According to an embodiment of the invention, the drain hole is arranged at a distance of 20-80 percent of the height of the lubricating oil chamber from the lower end of the chamber.

According to the invention, the arrangement comprises means for introducing the lubricating oil into the lubricating oil chamber from the cylinder head. When the lubricating oil is introduced into the lubricating oil chamber from the cylinder head, it can be fed by gravitation and it is not necessary to have any pumping device.

According to the present invention, the method for preventing fretting of the contact surfaces between a cylinder liner and an engine block comprises the step of introducing lubricating oil into a lubricating oil chamber being arranged between the cylinder liner and the engine block.

According to the invention, the method comprises the step of keeping the oil level in the lubricating oil chamber at a predetermined level.

According to the invention, the lubricating oil is introduced into the lubricating oil chamber from the cylinder head.

According to an embodiment of the invention, 20-80 percent of the lubricating oil chamber is filled with the lubricating oil.

### Brief description of the drawings

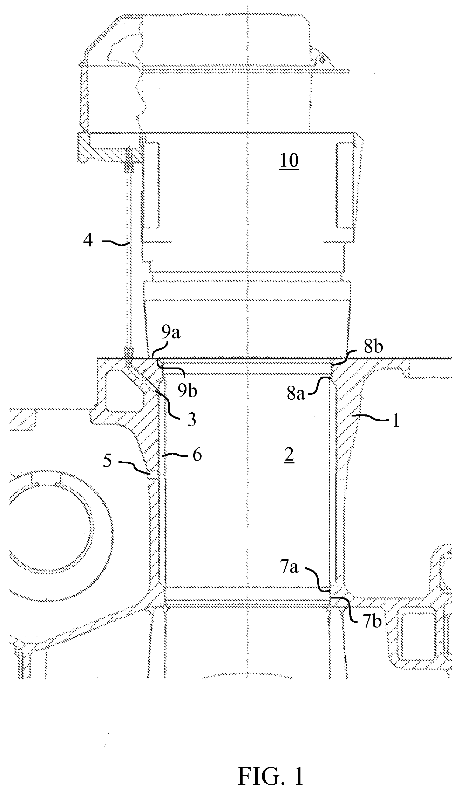

Fig. 1 shows part of the engine block of an internal combustion engine.

### Detailed description of the invention

The invention is now described in more detail with reference to the accompanying drawing.

In Fig. 1 is shown part of the engine block 1 of an internal combustion engine. Only one cylinder is shown, but the engine can comprise any reasonable number of cylinders arranged for instance in-line or in a V-configuration. The engine is a large four-stroke internal combustion engine, such as the engines used in power plants or as the main or auxiliary engines of ships. The invention is applicable to both compression ignition and spark ignition engines.

A cylinder liner 2 is arranged inside the engine block 1. The main part of the cylinder liner 2 is inside the engine block 1, but part of the cylinder liner 2 extends above the engine block 1 and protrudes outwards so that it can be supported against the top surface of the engine block 1. The engine block 1 comprises a first supporting surface 8a that is parallel to the longitudinal axis of the cylinder liner 2 and arranged inside a cylinder bore. A second supporting surface 9a that is perpendicular to the longitudinal axis of the cylinder liner 2 is arranged on the top surface of the engine block 1. The first supporting surface 8a carries the radial forces transmitted by the cylinder liner 2 and the second supporting surface 9a carries the axial forces transmitted by the cylinder liner 2.

The cylinder liner 2 comprises a first mating surface 8b lying against the first supporting surface 8a and a second mating surface 9b lying against the second supporting surface 9a. The engine block 1 is also provided with a guiding surface 7a, against which the third mating surface 7b of the cylinder liner 2 rests. Also the guiding surface 7a can carry radial forces transmitted by the cylinder liner 2. The supporting surfaces 8a, 9a and the guiding surface 7a of the engine block 1 and the mating surfaces 7b, 8b, 9b of the cylinder liner 2 form the contact surfaces between the engine block 1 and the cylinder liner 2.

To prevent fretting of the guiding surface 7a, the supporting surfaces 8a, 9a and the mating surfaces 7b, 8b, 9b, a lubricating oil chamber 6 is arranged between the engine block 1 and the cylinder liner 2. The lubricating oil chamber 6 is arranged peripherally around the cylinder liner 2. The shape of the lubricating oil chamber 6 can be for instance rectangular or cylindrical. In the embodiment of Fig. 1, the lubricating oil chamber 6 is arranged around the whole circumference of the cylinder liner 2 and extends over the whole length of that part of the cylinder liner 2 that is inside the engine block 1. However, the height of the lubricating oil chamber 6 could also be smaller, for instance 20-60 percent of the length of the cylinder liner 2. It is also possible that there is a plurality of lubricating oil chambers 6 arranged between the cylinder liner 2 and the engine block 1. For instance, one lubricating oil chamber could be arranged at the lower end of the cylinder bore and another lubricating oil chamber at the upper end of the cylinder bore. Lower end refers here to that end that is closer to the crankshaft of the engine. Supporting or guiding surfaces could be arranged between the two lubricating oil chambers.

The engine block 1 is provided with a bore 3, through which the lubricating oil can be introduced into the oil chamber 6. The lubricating oil is taken from the valve mechanism in the cylinder head 10, and guided in an oil duct 4 into the bore 3 in the engine block 1. The lubricating oil could also be introduced into the lubricating oil chamber 6 from some other part of the engine than the cylinder head 10.

To keep the lubricating oil level in the lubricating oil chamber 6 at the right level, the engine block 1 is provided with a drain hole 5, through which excess lubricating oil can be guided out of the oil chamber 6. In the embodiment of Fig. 1, the drain hole 5 is located at a distance that is approximately half of the height of the lubricating oil chamber 6 from the lower end of the lubricating oil chamber 6. Approximately half of the volume of the lubricating oil chamber 6 is thus filled with the lubricating oil. The distance of the drain hole 5 from the lower end of the lubricating oil chamber 6 can be chosen according to the application so that the desired lubrication and dampening effect is achieved. The drain hole 5 can be located for instance at a distance that is 20-80 percent of the height of the lubricating oil chamber 6 from the lower end of the chamber 6. In some applications, the drain hole 5 could be positioned at the upper end of the lubricating oil chamber 6 so that the whole chamber 6 is filled with the lubricating oil.

It will be appreciated by a person skilled in the art that the invention is not limited to the embodiments described above, but may vary within the scope of the appended claims.

## Claims

1. An engine block arrangement for a reciprocating piston internal combustion engine, the arrangement comprising an engine block (1) and a cylinder liner (2) being arranged inside the engine block (1), a lubricating oil chamber (6) being arranged between the cylinder liner (2) and the engine block (1), and means (3, 4) for introducing lubricating oil into the lubricating oil chamber (6) from the cylinder head (9), **characterized in that** the engine block (1) is provided with a drain hole (5) for keeping the oil level the in lubricating oil chamber (6) at a predetermined level.

2. An arrangement according to claim 1, **characterized in that** the lubricating oil chamber (6) is arranged around the whole circumference of the cylinder liner (2).

3. An arrangement according to claim 1 or 2, **characterized in that** the height of the lubricating oil chamber (6) is at least 20 percent of the length of the cylinder liner (2).

4. An arrangement according to any of claims 1-3, **characterized in that** apart from the contact surfaces (7a, 7b, 8a, 8b) between the engine block (1) and the cylinder liner (2), the lubricating oil chamber (6) extends over the whole length of the cylinder liner (2) inside the engine block (1).

5. An arrangement according to any of the preceding claims, **characterized in that** the drain hole (5) is arranged at a distance of 20-80 percent of the height of the lubricating oil chamber (6) from the lower end of the chamber (6).

6. A method for preventing fretting of the contact surfaces (7a, 7b, 8a, 8b, 9a, 9b) between a cylinder liner (2) and an engine block (1), which method comprises the step of introducing lubricating oil from the cylinder head (9) into a lubricating oil chamber (6) being arranged between the cylinder liner (2) and the engine block (1), **characterized in that** the oil level in the lubricating oil chamber (6) is kept at a predetermined level by means of a drain (5) hole in the engine block (1).

7. A method according to claim 6, **characterized in that** 20-80 percent of the lubricating oil chamber (6) is filled with the lubricating oil.

## Patentansprüche

1. Motorblockanordnung für eine Hubkolben-Verbrennungskraftmaschine, wobei die Anordnung einen Motorblock (1) und eine Zylinderlaufbuchse (2), die innerhalb des Motorblocks (1) angeordnet ist, eine Schmierölkammer (6), die zwischen der Zylinderlaufbuchse (2) und dem Motorblock (1) angeordnet ist, und Mittel (3, 4) zum Einleiten von Schmieröl in die Schmierölkammer (6) aus dem Zylinderkopf (9) umfasst, **dadurch gekennzeichnet, dass** der Motorblock (1) mit einem Ablassloch (5) versehen ist, um den Ölstand in der Schmierölkammer (6) bei einem vorbestimmten Stand zu halten.

2. Motorblockanordnung nach Anspruch 1, **dadurch gekennzeichnet, dass** die Schmierölkammer (6) um den gesamten Umfang der Zylinderlaufbuchse (2) angeordnet ist.

3. Motorblockanordnung nach Anspruch 1 oder 2, **dadurch gekennzeichnet, dass** die Höhe der Schmierölkammer (6) wenigstens 20 Prozent der Höhe der Zylinderlaufbuchse (2) beträgt.

4. Motorblockanordnung nach einem der Ansprüche 1 bis 3, **dadurch gekennzeichnet, dass** mit Ausnahme der Berührungsflächen (7a, 7b, 8a, 8b) zwischen dem Motorblock (1) und der Zylinderlaufbuchse (2) sich die Schmierölkammer (6) über die gesamte Länge der Zylinderlaufbuchse (2) innerhalb des Motorblocks (1) erstreckt.

5. Motorblockanordnung nach einem der vorhergehenden Ansprüche, **dadurch gekennzeichnet, dass** das Ablassloch (5) bei einer Entfernung von 20 bis 80 Prozent der Höhe der Schmierölkammer (6) vom unteren Ende der Kammer (6) angeordnet ist.

6. Verfahren zum Verhindern von Reibverschleiß der Berührungsflächen (7a, 7b, 8a, 8b, 9a, 9b) zwischen einer Zylinderlaufbuchse (2) und einem Motorblock (1), wobei das Verfahren den Schritt des Einleitens von Schmieröl aus dem Zylinderkopf (9) in eine Schmierölkammer (6) umfasst, die zwischen der Zylinderlaufbuchse (2) und dem Motorblock (1) angeordnet ist, **dadurch gekennzeichnet, dass** der Ölstand in der Schmierölkammer (6) mit Hilde eines Ablasslochs (5) in dem Motorblock (1) bei einem vorbestimmten Stand gehalten wird.

7. Verfahren nach Anspruch 6, **dadurch gekennzeichnet, dass** 20 bis 80 Prozent der Schmierölkammer (6) mit dem Schmieröl gefüllt sind.

## Revendications

1. Ensemble bloc-moteur pour un moteur à combustion interne à piston à mouvement alternatif, l'ensemble comprenant un bloc-moteur (1) et une chemise de cylindre (2) étant agencée à l'intérieur du bloc-moteur (1), une chambre d' huile de lubrification (6) étant agencée entre la chemise de cylindre (2) et le bloc-moteur (1) et des moyens (3, 4) pour introduire l'huile de lubrification dans la chambre d'huile de lubrification (6) depuis la culasse (9), **caractérisé en ce que** le bloc-moteur (1) est doté d'un trou de vidange (5) pour maintenir le niveau d'huile dans la chambre d'huile de lubrification (6) à un niveau prédéterminé.

2. Ensemble selon la revendication 1, **caractérisé en ce que** la chambre d'huile de lubrification (6) est agencée autour de toute la circonférence de la chemise de cylindre (2).

3. Ensemble selon la revendication 1 ou 2, **caractérisé en ce que** la hauteur de la chambre d'huile de lubrification (6) est au moins 20 pour cent de la longueur de la chemise de cylindre (2).

4. Ensemble selon l'une quelconque des revendications 1-3, **caractérisé en ce qu'**indépendamment des surfaces de contact (7a, 7b, 8a, 8b) entre le bloc-moteur (1) et la chemise de cylindre (2), la chambre d'huile de lubrification (6) s'étend sur toute la longueur de la chemise de cylindre (2) à l'intérieur du bloc-moteur (1).

5. Ensemble selon l'une quelconque des revendications précédentes, **caractérisé en ce que** le trou de vidange (5) est agencé à une distance de 20-80 pour cent de la hauteur de la chambre d'huile de lubrification (6) de l'extrémité inférieure de la chambre (6).

6. Procédé pour empêcher l'usure de contact des surfaces de contact (7a, 7b, 8a, 8b, 9a, 9b) entre une chemise de cylindre (2) et un bloc-moteur (1), lequel procédé comprend la phase d'introduction de l'huile de lubrification depuis la culasse (9) dans une chambre d'huile de lubrification (6) étant agencée entre la chemise de cylindre (2) et le bloc-moteur (1), **caractérisé en ce que** le niveau d'huile de la chambre d'huile de lubrification (6) est maintenu à un niveau prédéterminé au moyen d'un trou de vidange (5) dans le bloc-moteur (1).

7. Procédé selon la revendication 6, **caractérisé en ce que** la chambre d'huile de lubrification (6) est remplie à 20-80 pour cent d'huile de lubrification.
